(19) Europäisches Patentamt
European Patent Office
Office européen des brevets

(11) Veröffentlichungsnummer: **0 283 436**
**B1**

(12) # EUROPÄISCHE PATENTSCHRIFT

(45) Veröffentlichungstag der Patentschrift: **16.01.91**

(51) Int. Cl.[5]: **C 09 B 5/62,** C 08 K 5/16

(21) Anmeldenummer: **88810143.3**

(22) Anmeldetag: **07.03.88**

(54) **Perylentetracarbonsäurediimide mit langkettigen, Carbonylgruppen enthaltenden Resten.**

(30) Priorität: **13.03.87 CH 954/87**

(43) Veröffentlichungstag der Anmeldung:
**21.09.88 Patentblatt 88/38**

(45) Bekanntmachung des Hinweises auf die Patenterteilung:
**16.01.91 Patentblatt 91/03**

(84) Benannte Vertragsstaaten:
**AT BE DE FR GB IT NL**

(56) Entgegenhaltungen:
**EP-A-0 006 122**
**DE-A-2 616 486**
**DE-A-3 413 418**

(73) Patentinhaber: **CIBA-GEIGY AG**
**Klybeckstrasse 141**
**CH-4002 Basel (CH)**

(72) Erfinder: **Bäbler, Fridolin, Dr.**
**Route du Couchant 12**
**CH-1723 Marly (CH)**

**EP 0 283 436 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft Perylentetracarbonsäurediimide mit an beiden N-Atomen gebundenen, eine oder zwei Carboxy- und/oder Carbamoylgruppen enthaltenden, langkettigen aliphatischen Resten und ihre Verwendung zum Färben von Polyolefinen.

Aus der EP—PS 6 122 sind N,N'-Dialkylperylen-3,4,9,10-tetracarbonsäurediimide mit langkettigen Alkylresten zum Färben von Polyolefinen bekannt. Diese Produkte genügen allerdings einerseits wegen ihrer Ausblühtendenz, und andererseit bezüglich ihrer Nassechtheiten nicht immer den heutigen Anforderungen der Technik.

Die DE—AS 1 916 169 beschreibt Perylen-3,4,9,10-tetracarbonsäurediimide, die an beiden N-Atomen durch kürzere, eine Carboxygruppe enthaltende, aliphatische Reste substituiert sind, wie z.B. N,N'-Bis-(5-ethoxycarbonyl-pentyl)-perylendiimid, und ihre Verwendung zum Färben von Polyestern und Polyamiden. Pigmente diese Art eignen sich nicht zum Färben von Polyolefinen.

Harzfarbstoffe auf Basis von Perylendiimiden, die an beiden N-Atomen durch Polyamidketten mit mindestens 4 Carbamoylgruppen substituiert sind, werden in der SU—PS 703 554 als Farbstoffe zum Färben von Polyurethanschaum, Polyestern und Polyamiden beschrieben. Auch solche Farbkörper sind für das Färben von Polyolefinen nicht geeignet.

Es ist nun gefunden worden, dass Perylendiimide mit an beiden N-Atomen gebundenen, eine oder zwei Carboxy- und/oder Carbamoylgruppen enthaltenden, aliphatischen Resten mit mindestens 15 C-Atomen, sich überraschenderweise sehr gut zum Färben von Polyolefinen eignen, wobei sie eine geringe Ausblühtendenz und ausgezeichnete Nassechtheiten aufweisen.

Die vorliegende Erfindung betrifft demnach Perylen-3,4,9,10-tetracarbonsäurediimide der Formel I

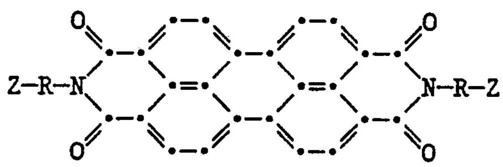

(I),

worin R einen geradkettigen oder verzweigten Alkylenrest mit 20 bis 50 C-Atomen bedeutet, der durch eine oder zwei Gruppen —COO— und/oder —OOC— unterbrochen ist, und Z Wasserstoff, Hydroxy oder eine Gruppe —COOH bedeutet.

Bevorzugt sind Perylendiimide der Formel I, worin R einen geradkettigen Alkylenrest mit 24 bis 40 C-Atomen bedeutet, der durch eine Gruppe —COO— oder —OOC— unterbrochen ist, und Z Wasserstoff bedeutet.

Besonders bevorzugt sind Perylendiimide der Formel I, worin —RZ eine Gruppe $-(CH_2)_{11}-COOC_{12}H_{25}$ oder $-(CH_2)_{11}-COOC_{18}H_{37}$ bedeutet.

Eine nicht ausschliessliche Ausdeutung de zahlreichen, verschiedenartigen Bedeutungen von R ergibt sich aus der nachfolgenden beispielhaften Aufzählung de zur Herstellung der Perylendiimide der Formel I einsetzbaren Ausgangsprodukte.

Perylendiimide der Formel I, worin R nur eine Gruppe —COO— und/oder —OOC— enthält, werden zweckmässig in zwei Syntheseschritten, ausgehend von Perylen-3,4,9,10-tetracarbonsäure oder deren Anhydrid, z.b. durch eine erste Kondensation mit einem aliphatischen oder cycloaliphatischen Aminoalkohol der Formel $H_2N—R_1—OH$ oder einer aliphatischen Aminoalkohol der Formel $H_2N—R_1—COOH$ und dann weitere Kondensation des erhaltenen Diimids mit eine aliphatischen Carbonsäure der Formel $HOOC—R_2Z$ oder einem aliphatischen oder cycloaliphatischen Alkohol der Formel $HO—R_2Z$, gemäss folgendem Reaktionsschema erhalten:

Perylen-3,4,9,10-tetracarbonsäure bzw. -anhydrid

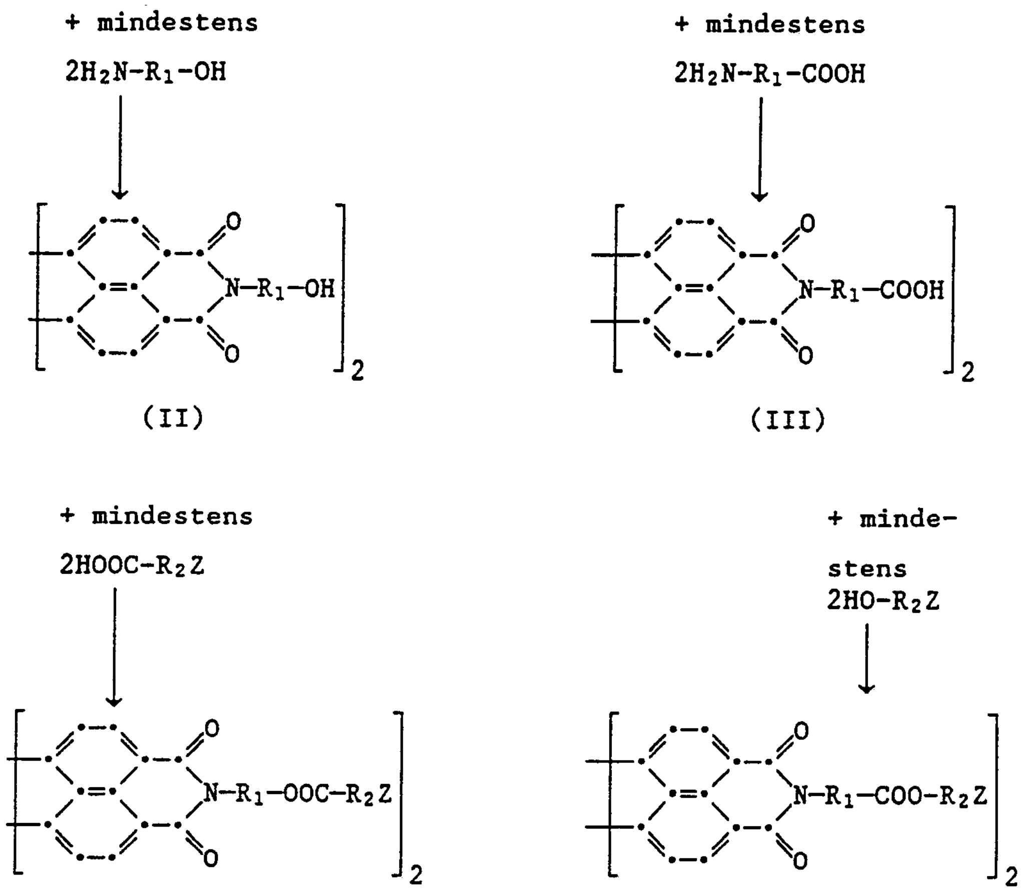


(II) (III)

Perylendiimide der Formel I, worin R zwei Gruppen —COO— und/oder —OOC— enthält, erhält man in Analogie zu der oben beschriebenen Verfahrensweise, aber durch drei aufeinanderfolgenden Kondensationsreaktionen, wobei die erste Kondensationsstufe, wie oben beschrieben zu Verbindungen der Formeln II oder III führt.

Die Verbindungen der Formel II können mit Dicarbonsäuren der Formel $HOOC—R_3—COOH$ oder mit Hydroxycarbonsäuren der Formel $HOOC—R_3—OH$, die Verbindungen der Formel III mit Hydroxycarbonsäuren der Formel $HOOC—R_3—OH$ oder mit Diolen der Formel $HO—R_3—OH$ weiter kondensiert werden ($R_3$ = Alkylen). Auch aliphatische Carbonsäureanhydride können hierzu eingesetzt werden (z.B. Bernsteinsäureanhydrid oder Dodecylbernsteinsäureanhydrid). Bei nicht endständigen Hydroxy-Gruppen entstehen zum Schluss verzweigte Diimide der Formel I mit Carboxy-Gruppen an Verzweigungsstellen. Die jeweils erhaltenen Dicarbonsäuren werden anschliessend mit einem aliphatischen Alkohol der Formel $HO—R_2Z$ und die Diole hingegen mit einer Carbonsäure der Formel $HOOC—R_2Z$ zu Endprodukten der Formel I kondensiert. Die obenerwähnten Kondensationsreaktionen werden beispielhaft durch die nachstehend aufgeführten Schemata erläutert.

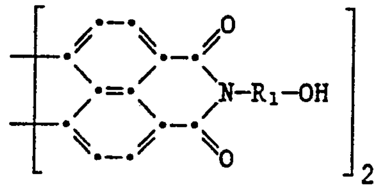

(II)

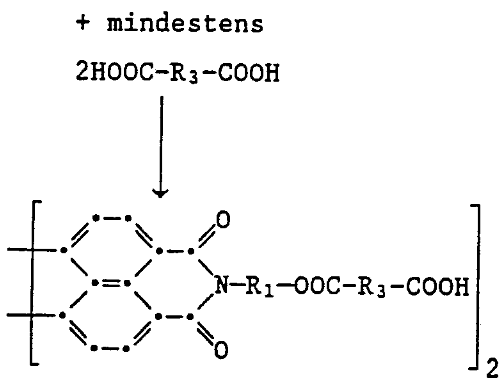
+ mindestens
2HOOC-R3-COOH

(IV)

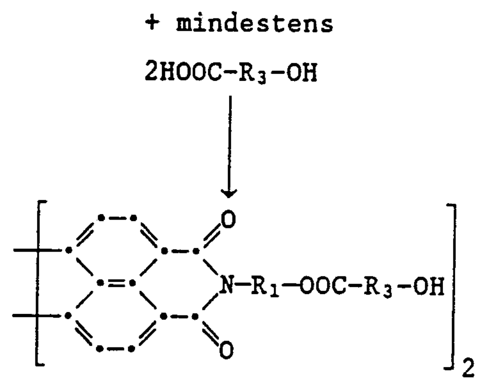
+ mindestens
2HOOC-R3-OH

(V)

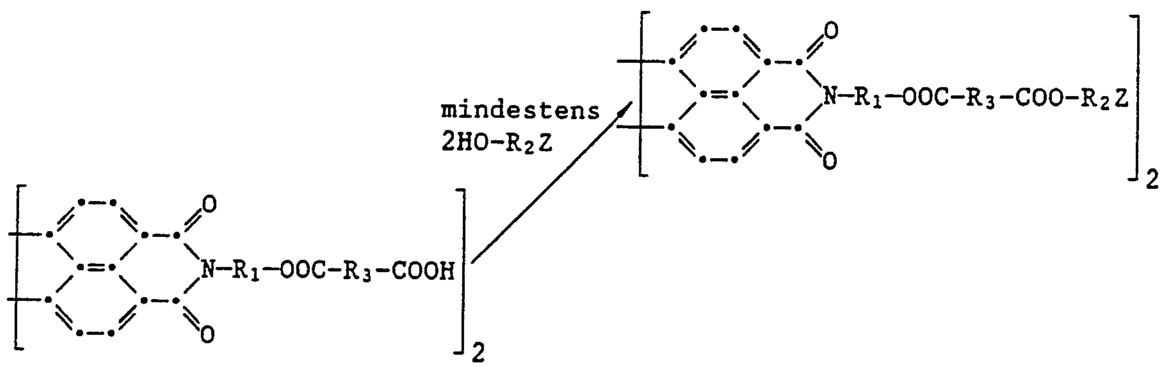
mindestens
2HO-R2Z

(IV)

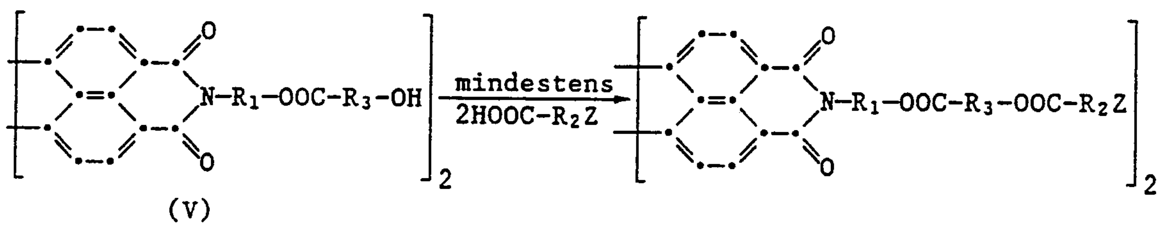
mindestens
2HOOC-R2Z

(V)

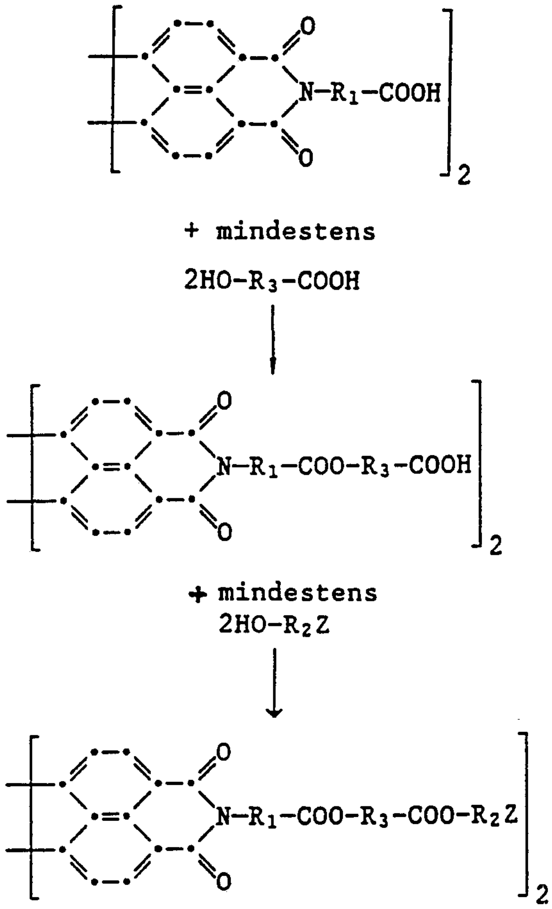
+ mindestens
2HO-$R_3$-COOH
+ mindestens
2HO-$R_2$Z

(III)

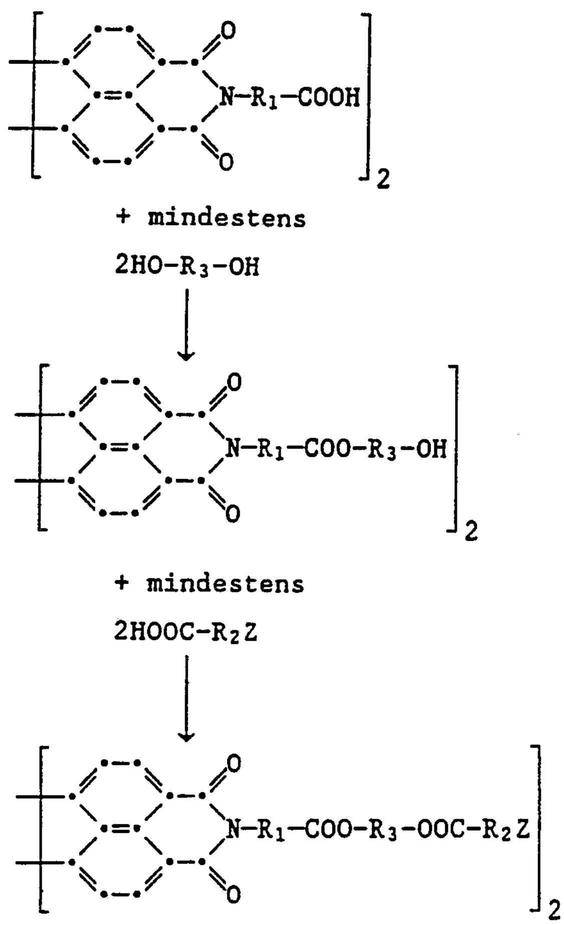
+ mindestens
2HO-$R_3$-OH
+ mindestens
2HOOC-$R_2$Z

(III)

Bedingung ist, dass die Ausgangsprodukte so ausgewählt werden, dass R in Formel I mindestens 20 C-Atome zusätzlich zu denjenigen der vorhandenen Carboxygruppen enthält.

Beispiele von Aminoalkoholen der Formel $H_2N—R_1—OH$ sind: 2-Aminothanol, 3-Aminopropylalkohol, 3-Amino-2,2-dimethylpropylalkohol, 4-Aminobutylalkohol, 4-Aminopentylalkohol, 6-Aminohexylalkohol, 4-Aminocyclohexylalkohol, 7-Aminoheptylalkohol, 7-Aminooctylalkohol, 6-Amino-2-ethylhexylalkohol, 9-Aminononylalkohol, 10-Aminodecylalkohol und 12-Aminododecylalkohol.

Als Beispiele von Aminocarbonsäuren der Formeln $H_2N—R_1—COOH$ seien genannt: Glycin, β-Alanin, λ-Aminobuttersäure, δ-Aminovaleriansäure, 6-Aminohexan-, 7-Aminoheptan-, 8-Aminooctan, 9-Aminononan-, 10-Aminodecan-, 11-Aminoundecan- und 12-Aminododecansäure.

Aliphatische und cycloaliphatische Alkohole der Formel $HO—R_2Z$ sind z.B. Methanol, Ethanol, Propylalkohol, Isopropylalkohol, Butylalkohol, Pentylalkohol, 2,2-Dimethylproylalkohol, Hexylalkohol, Cyclohexylalkohol, Octylalkohol, 2-Ethylhexylalkohol, Decylalkohol, Lauryl-, Myristyl-, Cetyl-, Stearyl-, Behenylalkohol und 8-Hydroxymethyltricyclo-[5,2,1,$0^{2,6}$]-decan.

Beispiele von aliphatischen Carbonsäuren der Formel $HOOC—R_2Z$, welche zweckmässig auch in Form ihrer Methylester oder ihrer Säurechloride eingesetzt werden können, sind: Ameisensäure, Essigsäure, Propionsäure, Buttersäure, Valeriansäure, Capronsäure, Caprylsäure, Pelargonsäure, Decan-, Dodecan-, Tetradecan-, Hexadecan-, Octadecan- und Docosansäure.

Geeignete Diole der Formel $HO—R_3—OH$ sind beispielsweise Hexandiol-1,6, Decandiol-1,10 oder Dodecandiol-1,12.

Beispiele für aliphatische Dicarbonsäuren der Formel $HOOC—R_3—COOH$ sind: Bernstein-, Glutar-, Adipin-, Pimelin-, Kork-, Sebacinsäure und Dodecandisäure-1,12, welche gegebenenfalls in Form ihrer Methylester, ihrer Säurechloride oder ihrer Anhydride eingesetzt werden können.

Hydroxycarbonsäuren de Formel $HOOC—R_3—OH$ sind z.B. δ-Hydroxyvaleriansäure, 6-Hydroxyhexansäure, 9-Hydroxynonansäure, 12-Hydroxydodecansäure, 18-Hydroxyoctadecansäure und 12-Hydroxyoctadecansäure.

Die Kondensationsreakionen können nach allgemein üblichen Methoden, beispielsweise in Gegenwart organischer Lösungsmittel oder bei Verwendung eines der entsprechenden Reaktionspartner als Lösungsmittel, bei Normal- oder Ueberdruck, mit oder ohne Katalysator, durchgeführt werden.

In bestimmten Fällen ist es auch möglich die Perylendiimide der Formel I durch Umsetzung von Perylen-3,4,9,10-tetracarbonsäure oder von deren Dianhydrid mit 2 Mol eines Amins der Formel $H_2N—RZ$, worin R und Z die oben angegebene Bedeutung haben, zu erhalten. Als Amine der Formel $H_2N—RZ$ kommen z.B. in Frage: $H_2N—R_1—OOC—R_2Z$, $H_2N—R_1—COO—R_2Z$, $H_2N—R_1—OOC—R_3—COO—R_2Z$, $H_2N—R_1—OOC—R_3—OOC—R_2Z$, $H_2N—R_1—COO—R_3—OOC—R_2Z$. Die Bedeutung von $R_1$, $R_2$ und $R_3$ ist aus den oben für die Verbindungen $H_2N—R_1—OH$, $H_2N—R_1—COOH$, $HO—R_2Z$, $HOOC—R_2Z$, $HO—R_3—OH$, $HOOC—R_3—COOH$, $HOOC—R_3—OH$ angegebenen Beispielen ersichtlich.

Als Lösungsmittel für die erste Kondensationsreaktion zur Bildung der entsprechenden Perylendiimide ausgehend von Perylen-3,4,9,10-tetracarbonsäure oder deren Dianhydrid sind z.B. Wasser, Dimethylformamid, N-Methylpyrrolidon, Chinolin, Glykole, wie Ethylen- oder Propylenglykol, Alkohole, wie Methanol, Ethanol, Propylalkohol, Isopropylalkohol, n-Butylalkohol und dessen Isomere oder Diacetonalkohol, sowie aromatische Kohlenwasserstoffe, wie Nitrobenzol, Chlorbenzol, Dichlor- und Trichlorbenzole, Toluole und Xylole geeignet.

Als Lösungsmittel für die zweite und dritte Kondensationsreaktion seien beispielsweise Cyclohexan, aromatische Kohlenwasserstoffe, wie Nitrobenzol, Chlorbenzol, Dichlor- und Trichlorbenzole, Toluole, Xylole, Cumol und tert.-Butylbenzol erwähnt.

Geeignete Katalysatoren für die Veresterungsreaktionen sind z.B. Toluolsulfonsäuren, Methansulfonsäure, Ammoniumbisulfat, Dibutylzinnoxid, Titan-IV-butoxid und konz. Schwefelsäure.

Verwendet man bei den Kondensationsreaktionen einen Reaktionspartner direkt als Lösungsmittel (im Ueberschuss), so wird das Reaktionsmedium nach vollständige Ester- bzw. Amidbildung vorzugsweise mit einem der oben erwahnten organischen Lösungsmittel verdünnt, bis die im Ueberschuss vorliegende Komponente in gelöstem Zustand vorliegt, dann wird die verbleibende Pigmentsuspension abfiltriert. Aus dem Filtrat lässt sich die überschüssige Komponente durch Abdampfen des Lösungsmittels zurückgewinnen.

Die erhaltenen erfindungsgemässen Perylendiimide werden nach üblichen Methoden isoliert und getrocknet. Sie können aufgrund ihrer ausgezeichneten Polyolefinverträglichkeit ohne weitere Konditionierung, wie mechanische Zerkleinerung oder Präparierung, zu deren Färbung direkt in Polyolefine eingearbeitet werden.

Obwohl die erfindungsgemässen Perylendiimide insbesondere zum Färben von Polyolefinen geeignet sind, können sie auch vorteilhaft zum Färben von anderen Polymeren insbesondere von Ingenieurwerkstoffen (Engineering Plastics), wie z.B. Polycarbonate, Polyacrylate, Polymethacrylate, ABS, Polyester, Polyamide, Polyetherketone, Polyurethane, einzeln oder in Mischungen, verwendet werden.

Als Biespiele für Polyolefine, die mit den erfindungsgemässen Perylendiimiden gefärbt werden können, seien Polyethylen hoher und niederer Dichte (HD—PE, LD—PE und LLD—PE), Polypropylen und Polyisobutylen, sowie Copolymere von Polyolefinen mit z.B. Polyethern, Polyetherketonen oder Polyurethanen erwähnt.

Die Färbung erfolgt nach den üblichen Verfahren, beispielsweise durch Mischen des Perylendiimids

mit dem Kunststoffgranulat oder -pulver und Extrudieren der Mischung zu Fasern, Folien oder Granulaten. Letztere können dann im Spritzgussverfahren zu Gegenständen verformt werden.

Die erhaltenen Ausfärbungen weisen hohe Reinheit und hohe Sättigung auf und zeichnen sich durch gute Beständigkeit, insbesondere gegen Hitze und Licht, sowie durch ihre geringe Ausblühtendenz aus. Ein besonderer Vorteil von mit den erfindungsgemässen Perylendiimiden gefärbten Polyethylengegenständen besteht darin, dass sie, insbesondere im Falle von HD—PE, keine erhöhte Neigung zu Verzugs- und Deformationserscheinungen zeigen.

Die mit den erfindungsgemässen Perylendiimiden gefärbten Fasern besitzen ausgezeichnete textile Eigenschaften, wie z.B. Licht- und Nassbeständigkeiten gegenüber Wasch- und Lösungsmitteln.

Die erfindungsgemässen Perylendiimide weisen zudem die überaschende Eigenschaft auf, dass sie sich bei Temperaturen über ~120°C — also auch während der Einfärbung — in den üblichen Einsatzkonzentrationen von 0,1 bis 2 Gew.%, bezogen auf das Polymer im Substrat mit stark orange fluoreszierender Farbe vollständig lösen, während sie unterhalb ~120°C als rotes Pigment im Polyolefin auskristallisieren. Diese Eigenschaft macht die erfindungsgemässen Perylendiimide besonders interessant für die Massefärbung von Polyolefinfasern. Infolge der in der Polymeschmelze gelösten Farbkörper treten keine Filterprobleme während des Spinnprozesses auf, und es könen feinste Fäden versponnen werden.

Da der Lösungsvorgang der erfindungsgemässen Perylendiimide im eingefärbten Polyolefin reversibel ist, können diese Verbindungen als thermochrome Farbkörper dienen, wobei der Farbwechsel

$$\text{Rot} \underset{<\sim 120°C}{\overset{>\sim 120°C}{\rightleftarrows}} \text{Orangefluoreszierend}$$

direkt als Warnsignal verwendet werden kann, wenn die mit erfindungsgemässen Perylendiimide eingefärbten Fasern, Folien oder Spritzgussgegenstände über die Schwelle von 120°C erhitzt werden.

Durch die Verwendung bestimmter Polyolefine oder anderer Polymere oder Copolymere oder Mischungen davon ist es möglich, je nach Struktur des Perylendiimids die Temperatur der Farbverschiebung von Rot nach Orange fluoreszierend und umgekehrt zu beeinflussen. In Ingenieurwerkstoffen, bevorzugt in Polycarbonaten, Polyacrylaten, Polymethacrylaten, bleiben die erfindungsgemässen Perylendiimide auch nach dem Erkalten in gelöster Form und ergeben orange fluoreszierende Ausfärbungen mit hoher Fluoreszenz und ausgezeichneten Licht- und Wetterbeständigkeiten. Die Verwendung von Perylendiimiden der Formel I zum Färben von Ingenieurwerkstoffen bildet demnach ebenfalls einen Gegenstand derr vorliegenden Erfindung.

Die nachfolgenden Beispiele dienen zur Erläuterung der Erfindung.

Beispiel 1

a) In einem Stahlautoklaven werden 39,2 g Perylenetracarbonsäuredianhydrid, 47 g 12-Aminododecansäure und 1000 ml Methanol während 24 Stunden bei 150°C gerührt und danach auf Raumtemperatur abgekühlt. Dann wird die Pigementsuspension abfiltriert. Der Presskuchen wird mit Methanol gewaschen, im Vakuumtrockschrank bei 80°C getrocknet und gepulvert. Man erhält 76 g Perylentetracarbonsäure-N,N'-bis-dodecansäure-imid, dessen Mikroanalyse folgendes Resultat ergibt:

C: ber. 73,26%: gef. 73,23%

H: ber. 6,92%; gef. 7,10%

N: ber. 3,56%; gef. 3,39%

b) In einem 750 ml fassenden Glasgefäss mit Rührer werden 23,6 g des gemäss Beispiel 1a) erhaltenen Perylentetracarbonsäure-N,N'-bis-dodecansäure-imids, 150 g 1-Octadecanol und 1,5 g p-Toluolsulfonsäure·$1H_2O$ auf 120°C erwärmt und bei dieser Temperatur während 20 Stunden verrührt. Das Reaktionswasser wird aus dem Glasgefäss abdestilliert. Das rote Gemisch wird dann auf 80°C abgekühlt und mit 500 ml Methanol versetzt. Der überschüssige Octadecanol geht dabei in Lösung. Man rührt noch 30 Minuten bei Rückflusstemperatur und filtriert das Pigment durch eine vorgewärmte Nutsche ab. Der Presskuchen wird mit warmem Methanol Octadecanol-frei gewaschen, im Vakuumtrockenschrank bei 80°C getrocknet und gepulvert. Man erhält 38,3 g Perylentetracarbonsäure-N,N'-bis-(dodecansäurestearylester)-imid, welches sich einwandfrei in Polyolefinmassen einarbeiten lässt und rote Ausfärbungen hoher Reinheit und Sättigung mit ausgezeichnete Hitze-, Licht- und Wetterbeständigkeiten und geringer Ausblühtendenz ergibt.

Die Mikroanalyse ergibt folgendes Resultat:

C: ber. 78,09%: gef. 78,13%

H: ber. 9,83%; gef. 9,73%

N: ber. 2,17%; gef. 2,12%

Beispiel 2

In einem 750 ml fassenden Glasgefäss mit Rührer werden 23,6 des gemäss Beispiel 1a) erhaltenen Perylentetracarbonsäure-N,N'-bis-dodecansäure-imids, 150 g 1-Dodecanol und 2 g p-Toluolsulfonsäure·$1H_2O$ auf 120°C erwärmt und bei dieser Temperatur während 20 Stunden verrührt. Das Reaktionswasserstoff wird aus dem Glasgefäss abdestilliert. Das Gemisch wird dann auf 80°C abgekühlt und mit 500 ml Methanol versetzt. Der überschüssige Dodecanol geht dabei in Lösung. Man rührt noch 30 Minuten bei Rückflusstemperatur und filtriert das Pigment durch eine vorgewärmte Nutsche ab. Der Presskuchen wird mit warmem Methanol Dodecanol-frei gewaschen, im Vakuumtrockenschrank bei 80°C getrocknet und gepulvert. Man erhält 31,0 g Perylentetracarbonsäure-N,N'-bis-(dodecansäurelaurylester)-imid, welches bei der Massefärbung von Polyolefinen ebenfalls rote Ausfärbungen hoher Reinheit mit guten Hitze-, Licht- und Wetterbeständigkeiten und geringe Ausblühtendenz ergibt.

Die Mikroanalyse ergibt folgende Werte:

C: ber. 76,97%: gef. 76,62%

H: ber. 9,15%; gef. 9,07%

N: ber. 2,49%; gef. 2,54%

Beispiel 3

Verfährt man analog wie in Biespiel 1b) beschrieben, verwendet aber anstelle von 1-Octadecanol die äquivalente Menge 1-Docosanol, so erhält man 26 g Perylentetracarbonsäure-N,N'-bis-(dodecansäurelaurylester)-imid, welches sich ausgezeichnet in Polyolefine einarbeiten lässt und rote Ausfärbungen mit ausgezeichneten Hitze-, Licht- und Wetterbeständigkeiten und geringe Ausblühtendenz ergibt.

Die Mikroanalyse ergibt folgende Werte:

C: ber. 78,7%: gef. 78,2%

H: ber. 10,2%; gef. 10,1%

N: ber. 2,0%; gef. 2,1%

Beispiel 4

Verfährt man analog wie in Biespiel 1b) beschrieben, verwendet aber anstelle von 150 g 1-Octadecanol 200 g 8-Hydroxymethyl-tricyclo[5,2,1,$0^{2,6}$]-decan (®TCD-Alkohol M von HOECHST) so erhält man 30 g Perylentetracarbonsäure-N,N'-bis-(dodecansäuretricyclo[5,2,1,$0^{2,6}$]-decanmethylester)-imid, welches bei der Massefärbung von Polyolefinen rote Ausfärbungen mit hohen Beständigkeiten und geringer Ausblühtendenz ergibt.

Die Mikroanalyse ergibt folgende Werte:

C: ber. 77,6%: gef. 77,5%

H: ber. 8,0%; gef. 8,1%

N: ber. 2,6%; gef. 2,7%

Beispiel 5

a) In einem Stahlautoklaven werden 15,8 g Perylentetracarbonsäuredianhydrid, 9,0 g Neopentoanolamin und 160 ml Methanol während 18 Stunden bei 160°C verrührt. Die Pigmentsuspension wird abgekühlt und abfiltriert; der Presskuchen wird mit Methanol gut gewaschen, im Vakuumtrockenschrank bei 80°C getrocknet und gepulvert. Man erhält 210 g Perylentetracarbonsäure-N,N'-bis-neopentanol-imid, dessen Mikroanalyse folgende Werte ergibt:

C: ber. 77,58%: gef. 72,0%

H: ber. 5,38%; gef. 5,3%

N: ber. 4,98%; gef. 5,0%

b) In einem 350 ml fassenden Glasgefäss mit Rührer werden 5,6 g des nach Beispiel 5a) erhaltenen Perylentetracarbonsäure-N,N'-bis-neopentanol-imids, 60 g Stearinsäure und 1,0 g p-Toluolsulfonsäure·$1H_2O$ auf 120°C erhitzt und bei dieser Temperatur während 22 Stunden verrührt. Anwesendes Wasser wird durch Ueberleiten eines Stickstoffstromes ständig aus dem Reaktionsgefäss entfernt. nach beendeter Reaktion wird das Gemisch auf 60°C abgekühlt, mit 300 ml Methanol verdünnt, 30 Minuten bei Rückflusstemperatur verrührt, und über eine vorgewärmte Nutsche abfiltriert. Der Presskuchen wird mit warmem Methanol Stearinsäurefrei gewaschen, bei 80°C im Vakuumtrockenschrank getrocknet und gepulvert. Man erhält 10,2 g Perylendiimid der Formel

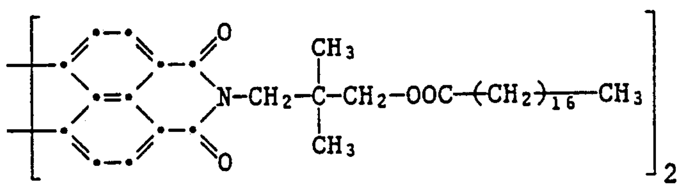

welches, in Polyolefine eingearbeitet, sehr farbstarke, rote Ausfärbungen hoher Reinheit und Sättigung mit ausgezeichneten Hitze-, Licht- und Wetterbeständigkeiten und geringer Ausblühtendenz ergibt.

Die Mikroanalyse ergibt folgende Werte:

C: ber. 76,74%: gef. 76,52%

H: ber. 9,02%; gef. 9,08%

N: ber. 2,56%; gef. 2,56%

Beispiel 6

In einem 750 ml fassenden Glasgefäss werden 5,1 g Perylentetracarbonsäure-N,N'-bis-(γ-hydroxypropyl)-imid, welches gemäss Beispiel 2 der DE—AS 2 451 780 erhalten werden kann, 45 g Dodecandisäure-1,12 und 0,9 g p-Toluolsulfonsäure·$1H_2O$ während 20 Stunden bei 150°C verrührt. Anwesendes Wasser wird durch Ueberleiten eines Stickstoffstromes aus dem Glasgefäss entfernt. Nach beendeter Kondensationsreaktion wird das Gemisch abgekühlt, mit 400 ml Diacetonalkohol versetzt, bei 120°C während 30 Minuten gerührt und heiss über eine vorgewärmte Nutsche abfiltriert. Der Presskuchen wird mit warmem Diacetonalkohol Dodecandicarbonsäure-frei gewaschen, im Vakuumtrockenschrank bei 80°C getrocknet und gepulvert. Man erhält 8,9 g Perylendiimid der Formel

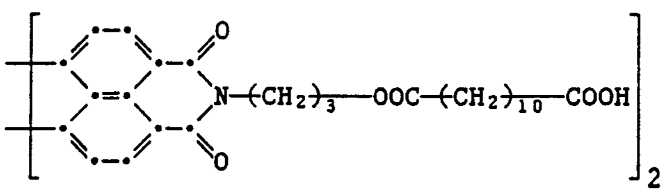

welches sich ausgezeichnet in Polyolefine einarbeiten lässt und rote Ausfärbungen mit ausgezeichneten Beständigkeiten und geringer Ausblühtendenz ergibt und dessen Mikroanalyse folgendes Resultat ergibt:

C: ber. 69,97%: gef. 69,37%

H: ber. 6,67%; gef. 6,75%

N: ber. 3,01%; gef. 2,98%

Beispiel 7

a) In einem 750 ml fassenden Glasgefäss mit Rührer werden 7,9 g Perylentetracarbonsäure-N,N'-bis-dodecansäure-imid, 45 g des Diols der Formel $HO{-}(CH_2)_{14}OH$ und 1,0 g p-Toluolsulfonsäure·$1H_2O$ auf 120°C erhitzt und bei dieser Temperatur während 18 Stunden verrührt. Anwesendes Wasser wird durch

Ueberleiten eines Stickstoffstromes ständig aus dem Reaktionsgefäss entfernt. Nach beendeter Reaktion wird das Gemisch auf 60°C abgekühlt, mit 400 ml Methanol verdünnt, 30 Minuten bei Rückflusstemperatur verrührt und über eine vorgewärmte Nutsche abfiltriert. Der Presskuchen wird mit warmem Methanol Diolfrei gewaschen, bei 80°C im Vakuumtrockenschrank getrocknet und gepulvert. Man erhält 10,9 g Perylendiimid der Formel

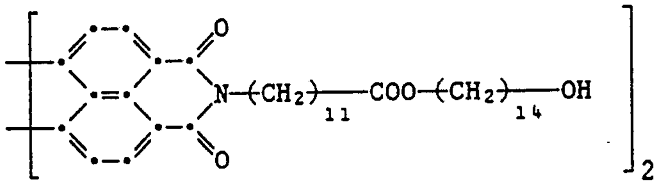,

welches, in Polyolefine eingearbeitet, sehr farbstarke, rote Ausfärbungen mit ausgezeichneten Hitze-, Licht- und Wetterbeständigkeiten ergibt.

Die Mikroanalyse ergibt folgende Werte:

C: ber. 75,33%: gef. 75,65%

H: ber. 9,15%; gef. 9,09%

N: ber. 2,31%; gef. 2,11%

b) In einem 350 ml fassenden Glasgefäss mit Rührer werden 3,6 g des nach Beispiel 7a) erhaltenen Perylendiimids und 80 ml Acetanhydrid während 21 Stunden bei Rückflusstemperatur verrührt. Danach wird die Pigmentsuspension abgekühlt und abfiltriert. Der Presskuchen wird mit Eisessig gewaschen, bei 80°C im Vakuumtrockenschrank getrocknet und gepulvert. Man erhält 3,7 g Perylendiimid der Formel

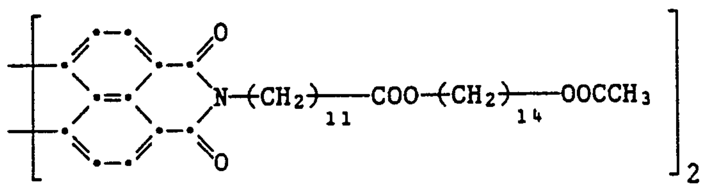,

welches, in Polyolefine eingearbeitet, sehr farbstark, rote Ausfärbungen mit ausgezeichneten Hitze-, Licht- und Wetterbeständigkeiten ergibt.

Die Mikroanalyse ergibt folgende Werte:

C: ber. 74,15%: gef. 74,70%

H: ber. 8,87%; gef. 8,86%

N: ber. 2,31%; gef. 2,08%

Beispiel 8

Eine Mischung von 1,0 g des nach Beispiel 1b) erhaltenen Perylendiimids, 1,0 g Antioxidans (®IRGANOX 1010, CIBA-GEIGY AG) und 1000 g Polyethylen HD Granulat (®VESTOLEN A 60—16, HUELS) wird während 15 Minuten in einer 3 1-Glasflasche auf einem Rollbock vorgemischt. Danach wird die Mischung zweimal durch einen Einwellenextruder extrudiert und anschliessend granuliert. Das so erhaltene Granulat wird dann auf der Spritzgussmaschine (®Allround Arburg 200) bei 220°C, 250°C und 300°C mit einer Verweilzeit von je 5 Minuten zu Platten verspritzt. Die so erhaltenen Platten weisen gleichmässig farbstarke rote Färbungen auf und sind ebenso verzugsfrei wie Spritzlinge des ungefärbten Polyethylens. Werden die so gefärbten, gespritzten Platten während 24 Stunden bei 100°C ini einem Ofen gelagert, so kann kein Ausblühen des Pigmentes aus dem Kunststoff festgestellt werden.

Bei Erwärmen der wie oben beschriebenen gefärbten Platten auf 130°C verändert sich deren rote Farbe in ein leuchtend fluoreszierendes Orange, welches sich bei Temperaturen unterhalb 120°C sofort wieder in die rote Ausgangsfarbe umwandelt.

Beispiel 9

Verfährt man analog wie in Beispiel 8 beschrieben, verwendet aber neben dem Buntpigment 10 g Titandioxid ®KRONOS RN 57—P (KRONOS Titan GmbH), so erhält man rote Pressplatten mit ebensoguten Hitzebeständigkeiten. Die zwischen 200°C und 300°C gespritzten Pressplatten weisen nach dem Erkalten keine Farbabweichungen auf.

Beispiel 10

1000 g PolypropylengranulLat (®DAPLEN PT—55, Chemie LINZ) und 1,0 g des nach Beispiel 1b) erhaltenen Perylendiimids werden in einer 3 1-Flasche 15 Minuten auf einem Rollbock gemischt. Danach wird die Mischung zweimal durch inen Einwellenextruder extrudiert und anschliessend granuliert. Das so erhaltene Granulat wird bei 280—285°C nach dem Schmelzspinnverfahren versponnen. Während des Spinnprozesses ist der Farbkörper in orangefluoreszierender Farbe im Substrat gelöst und kristallisiert beim Erkalten (unter 120°C) im Fasermaterial vollständig als roter Farbkörper aus. Die so gefärbten Fasern weisen sehr gute Lichtbeständigkeit und ausgezeichnete textile Echtheiten, wie Reibechtheit und Nassechtheit gegenüber Wasch- und Lösungsmitteln, auf. Die Hitzebeständigkeit bei 285°C ist ausgezeichnet.

Beispiel 11

100 g Polymethylmethacrylatgranulat (DEGALAN 7E® der Firma DEGUSSA AG) und 0,2 g des nach Beispiel 1b) erhaltenen Perylendiimids werden während 20 Minuten in einer 500 ml-Glasflasche auf einem Rollbock vorgemischt. Danach wird die Mischung auf einem Einwellenextruder zu einem Band extrudiert. Man erhält ein transparentes stark orange-fluoreszierend gefärbtes Kunststoffband, welches ausgezeichnete Hitze- und Lichtbeständigkeiten aufweist. Verwendet man anstelle des Perylenimids gemäss Beispiel 1b) die Perylenimide gemäss Beispiel 2 bis 8b), so erhält man orange-fluoreszierende Bänder mit analog guten Eigenschaften.

Beispiel 12

Verfährt man analog wie in Beispiel 11 beschrieben, verwendet aber anstelle von Polymethylmethacrylat ein Polycarbonatgranulat (MAKROLON 2800® der Firma BAYER), so erhält man transparente stark orange-fluoreszierende Bänder mit ausgezeichneten Hitze- und Lichtbeständigkeiten.

**Patentansprüche**

1. Perylen-3,4,9,10-tetracarbonsäurediimide der Formel I

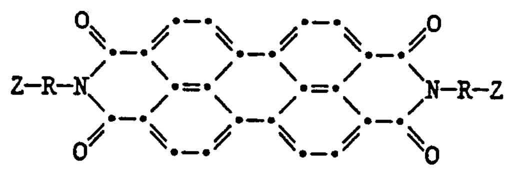

(I),

worin R einen geradkettigen oder verzweigten Alkylenrest mit 20 bis 50 C-Atomen bedeutet, der durch eine oder zwei Gruppen —COO— und/oder —OOC— unterbrochen ist, und Z Wasserstoff, Hydroxy oder eine Gruppe —COOH ist.

2. Perylen-3,4,9,10-tetracarbonsäurediimide der Formel I gemäss Anspruch 1, worin R einen geradkettigen Alkylenrest mit 24 bis 40 C-ATomen bedeutet, der durch eine Gruppe —COO— oder —OOC— unterbrochen ist, und Z Wasserstoff bedeutet.

3. Perylen-3,4,9,10-tetracarbonsäurediimide gemäss Anspruch 1 de Formel I worin —RZ eine Gruppe $-(CH_2)_{11}COOC_{12}H_{25}$ oder $-(H_2)_{11}COOC_{18}H_{37}$ bedeutet.

4. Polyolefine enthaltend als Farbkörper ein Perylen-3,4,9,10-tetracarbonsäurediimid der Formel I, gemäss Anspruch 1.

5. Ingenieurwerkstoffe (Engineering Plastics) enthaltend als Farbkörper ein Perylen-3,4,9,10-tetracarbonsäurediimid der Formel I, gemäss Anspruch 1.

**Revendications**

1. Diimides d'acide pérylènetétracarboxylique-3,4,9,10, de formule I

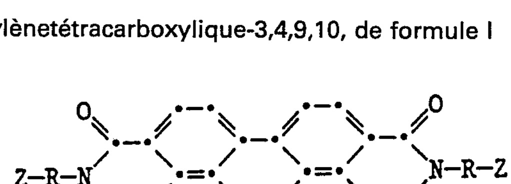

(I),

dans laquelle R représente un reste alkylène, linéaire ou ramifié, ayant 20 à 50 atomes de carbone, qui est interrompu par un ou deux groupes —COO— et/ou —OOC—, et Z représente un atome d'hydrogène, un groupe hydroxy ou un groupe —COOH.

2. Diimides de l'acide pérylène-3,4,9,10-tétracarboxylique de formule I selon la revendication 1, dans laquelle R représente un reste alkylène linéaire ayant 24 à 40 atomes de carbone, qui est interrompu par un groupe —COO— ou — —OOC—, et Z représente un atome d'hydrogène.

3. Diimides de l'acide pérylènetétracarboxylique-3,4,9,10 selon la revendication 1, de formule I, dans laquelle —RZ représente un groupe $-(CH_2)_{11}COOC_{12}H_{25}$ ou $-(CH_2)_{11}COOC_{18}H_{37}$.

4. Polyoléfines, contenant comme corps coloré ou colorant un diimide d'acide pérylènetétracarboxylique-3,4,9,10 de formule I selon la revendication 1.

5. Matériau structurel ou pour ingénieur ("Engineering Plastics") contenant, comme corps coloré ou colorant, un diimide d'acide pérylènetétracarboxylique, 3,4,9,10 de formule I, selon la revendication 1.

**Claims**

1. A perylene-3,4,9,10-tetracarboxylic acid diimide of the formula I

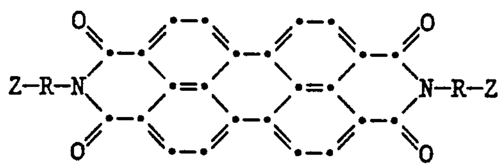

(I),

in which R is a linear or branched alkylene radical which has 20 or 50 C atoms and is interrupted by one or two —COO— and/or —OOC— groups, and Z is hydrogen, hydroxyl or a —COOH group.

2. A perylene-3,4,9,10-tetracarboxylic acid diimide of the formula I according to claim 1, in which R is a linear alkylene radical which has 24 to 40 C atoms and is interrupted by a —COO— or —OOC— group, and Z is hydrogen.

3. A perylene-3,4,9,10-tetracarboxylic acid diimide, according to claim 1, of the formula I in which —RZ is a $-(CH_2)_{11}COOC_{12}H_{25}$ or $-(CH_2)_{11}COOC_{18}H_{37}$ group.

4. A polyolefin containing, as the colouring substance, a perylene-3,4,9,10-tetracarboxylic acid diimide of the formula I, according to claim 1.

5. An engineering plastic containing, as the colouring substance, a perylene-3,4,9,10-tetracarboxylic acid diimide of the formula I, according to claim 1.